# EUROPEAN PATENT APPLICATION

(11) **EP 3 162 708 A1**
(43) Date of publication of application: **03.05.2017**
(21) Application number: 15275224.2
(22) Date of filing: 30.10.2015
(51) Int. Cl.: B64C 29/02, B64C 39/02

(54) **AIR VEHICLE AND METHOD AND APPARATUS FOR CONTROL THEREOF**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

An air vehicle (10) comprising a main body (12)and a pair of opposing wing members (14a, 14b) extending substantially laterally from the main body (12), at least a first propulsion device (16) associated with a first of said wing members (14a) and a second propulsion device (16) associated with a second of said wing members (14b), each said propulsion device (16) being arranged and configured to generate linear thrust relative to said main body (12), in use, the air vehicle further comprising a control module for generating a control signal configured to change a mode of flying of said air vehicle, in use, between a fixed wing mode (Figure 2) and a rotary wing mode (Figure 3), wherein, in said fixed wing mode of flying, the direction of thrust generated by the first propulsion device (16) relative to the main body (12) is the same as the direction of thrust generated by the second propulsion device (16), and in said second mode of flying, the direction of thrust generated by the first propulsion device (16) relative to the main body is opposite to that generated by the second propulsion device (16).

## Description

This invention relates generally to an air vehicle, and, more particularly but not necessarily exclusively, to an unmanned aerial vehicle (UAV) and method and apparatus for control thereof.

Unmanned aerial vehicles (UAVs), are well known and used in many different military, as well as civil and commercial, applications, such as search and rescue, surveillance, reconnaissance, etc. In general, a UAV is a powered aerial vehicle that does not require a human operator, uses aerodynamic forces to provide vehicle lift, and can fly autonomously or be piloted remotely. Although not always a requirement, it is often required for such vehicles to be recoverable and even reusable after a mission.

As with piloted air vehicles, two principal, general types of UAV are known: (i) fixed wing, and (ii) rotary wing.

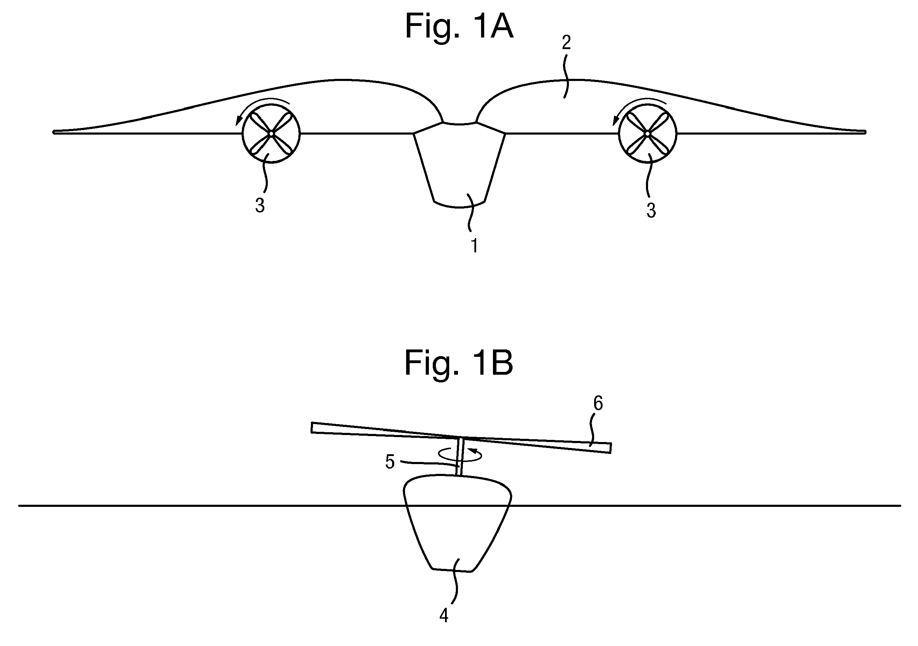

A fixed wing air vehicle is illustrated schematically in Figure 1A of the drawings. As shown, a fixed wing air vehicle comprises a main body 1 having a pair of wings 2 extending therefrom, and a respective thrust mechanism 3, such as a propeller or jet, mounted on (or in relation to) each wing. Lift is created by the vehicle's forward airspeed and the shape of the wings 2. The principal advantage of a fixed wing UAV is the speed and endurance that can be achieved, making such UAVs particularly suitable for long-distance and/or persistent missions.

A rotary wing air vehicle is illustrated schematically in Figure 1B of the drawings. As shown, a rotary wing UAV typically comprises a main body 4 having a generally central mast 5 mounted at its upper end, with rotor blades 6 rotatably mounted on the mast 5. Lift is generated by high speed rotation of the rotor blades 6 around the mast 5. The principal advantage of a rotary wing UAV is that it can take off and land vertically as well as fly forwards, backwards and laterally, and hover, making it particularly suitable for take off and landing where ground space is limited, as well as specific surveillance operations where control is paramount. However, compared with fixed wing air vehicles, rotary winged aircraft have a relatively limited 'endurance'.

There are, nevertheless, many circumstances in which the speed and endurance capability of a fixed wing UAV, as well as the manoeuvrability of a rotary wing UAV, may be required, whereas there is currently a clear trade-off between the two distinct types of UAV. It would, therefore, be desirable to provide an air vehicle, such as a UAV, that is able to take off and land from a relatively small ground space, fly forward, backward and laterally, as required, and hover, as well as having the speed and endurance characteristics of a fixed wing air vehicle.

Aspects of the present invention seek to address at least some of these issues and, in accordance with a first aspect of the present invention, there is provided an air vehicle comprising a main body and a pair of opposing wing members extending substantially laterally from the main body, at least a first propulsion device associated with a first of said wing members and a second propulsion device associated with a second of said wing members, each said propulsion device being arranged and configured to generate linear thrust relative to said main body, in use, the air vehicle further comprising a control module for generating a control signal configured to change a mode of flying of said air vehicle, in use, between a fixed wing mode and a rotary wing mode, wherein, in said fixed wing mode of flying, the direction of thrust generated by the first propulsion device relative to the main body is the same as the direction of thrust generated by the second propulsion device, and in said second mode of flying, the direction of thrust generated by the first propulsion device relative to the main body is opposite to that generated by the second propulsion device.

In one exemplary embodiment, the propulsion devices may be fixedly coupled to respective wing members, and at least one of said wing members may be rotatably mounted with respect to said body for rotation about an axis orthogonal to the width of the main body when in an upright orientation, between a first position defining said fixed flying mode wherein thrust generated by both said propulsion devices acts in the same direction relative to the main body, and a second position defining said rotary wing flying mode wherein thrust generated by said propulsion devices acts in opposite respective directions relative to said main body.

The at least one wing member may be configured to rotate through substantially 180° about said axis between said first and second positions. The at least one wing member may be mounted to the main body via a coupling member, said coupling member engaging with an actuation device located in or on said main body, wherein operation of said actuation member is effected by said control signal and causes rotation of said at least one wing member via said coupling member. In an exemplary embodiment, the at least one wing member may be mounted to said main body via a geared spigot, the air vehicle further comprising a geared actuator assembly with which said geared spigot engages, in use, and wherein rotation of said actuator causes corresponding rotation of said at least one wing member, via said geared spigot, between said first and second positions.

In an exemplary embodiment, the propulsion devices may comprise propellers, and said change of mode of flying may be effected by changing the direction of rotation of one of said propellers. In any event, it is envisaged that the aerofoil cross-section and/or angle of attack of the propeller blades may be dynamically altered, depending on where they are within their respective rotary cycle, in order to maintain an adequate aerofoil cross-section (relative to the direction of motion of the vehicle) for effective flight, and obviate any counter-productive effect thereof on horizontal motion of the vehicle.

The control module may be configured to receive control inputs representative of vehicle movement and generate control signals configured to cause the respective vehicle movement. Such vehicle movement may comprise an increase or decrease in altitude, and said control signals may be configured to cause a respective substantially equal increase or decrease in thrust generated by both of said propulsion devices.

The vehicle movement may comprise horizontal movement in a selected direction, said wing members comprising selectively movable flight control members, said control signals being configured to effect cyclic control of said air vehicle by selectively changing the cross-sectional shape of the respective wing members by selective movement of said flight control members.

The vehicle movement may comprise horizontal movement, and said control signals may be configured to alter the angle of attack of one or both said wing members, dynamically depending on their relative location within a rotary cycle, or otherwise) to effect a selected horizontal movement of said vehicle. Furthermore, the vehicle may include a mechanism for changing the aerofoil cross-section of the blades of said propeller, relative to the direction of movement of said vehicle, according to the relative location of said blades within a rotary cycle of said propeller.

In accordance with another aspect of the present invention, there is provided an unmanned air vehicle substantially as described above.

In accordance with a further aspect of the present invention, there is provided a control module for a vehicle substantially as described above, the control module being configured to receive a control input and generate a control signal representative thereof configured to change the mode of flying of said air vehicle from said fixed wing mode to said rotary wing mode.

In accordance with yet another aspect of the present invention, there is provided a method of controlling an air vehicle comprising a main body and a pair of opposing wing members extending substantially laterally from the main body, at least a first propulsion device associated with a first of said wing members and a second propulsion device associated with a second of said wing members, each said propulsion device being arranged and configured to generate linear thrust relative to said main body, in use, the method comprising changing a mode of flying of said air vehicle from a fixed wing mode, in which the direction of thrust generated by the first propulsion device relative to the main body is the same as the direction of thrust generated by the second propulsion device, to a rotary wing mode, by changing the direction of thrust generated by the first propulsion device such that it is opposite to that generated by the second propulsion device relative to the main body.

These and other aspects of the present invention will be apparent from the following specific description, in which embodiments of the present invention are described, by way of examples only, and with reference to the accompanying drawings, in which:
Figure 1A is a schematic front view of a fixed wing air vehicle according to the prior art;
Figure 1B is a schematic front view of a rotary wing air vehicle according to the prior art;
Figure 2 is a schematic plan view of a hybrid fixed-rotary wing air vehicle according to a first exemplary embodiment of the present invention, illustrated in the fixed wing flying mode configuration;
Figure 3 is a schematic plan view of the hybrid fixed-rotary wing air vehicle of Figure 2, illustrated in the rotary wing flying mode configuration;
Figure 3A is a schematic side cross-sectional view of a wing for use in a hybrid fixed-rotary wing air vehicle according to an exemplary embodiment of the present invention;
Figure 4 is a schematic plan view illustrating the manner of connection of a wing to the main body in a hybrid fixed-rotary wing air vehicle according to an exemplary embodiment of the present invention;
Figure 4A is a schematic diagram illustrating the flight phases of a typical mission undertaken by a hybrid fixed-rotary wing air vehicle according to an exemplary embodiment of the present invention;
Figure 5 is a schematic representation of a mechanism for causing rotation of a wing in a hybrid fixed-rotary wing air vehicle according to an exemplary embodiment of the present invention;
Figures 6A and 6B are schematic side cross-sectional views of a wing in respective upright and inverted orientations;
Figure 6C is a schematic diagram illustrating the concept of changing the angle of attack of a wing after it has been rotated to reverse the thrust direction, so as to compensate for the resultant counter-productive lift created by an inverted aerofoil; and
Figures 7A and 7B are schematic plan views of a hybrid fixed-rotary wing air vehicle according to a second exemplary embodiment of the present invention, in the fixed wing and rotary wing flying modes, respectively.

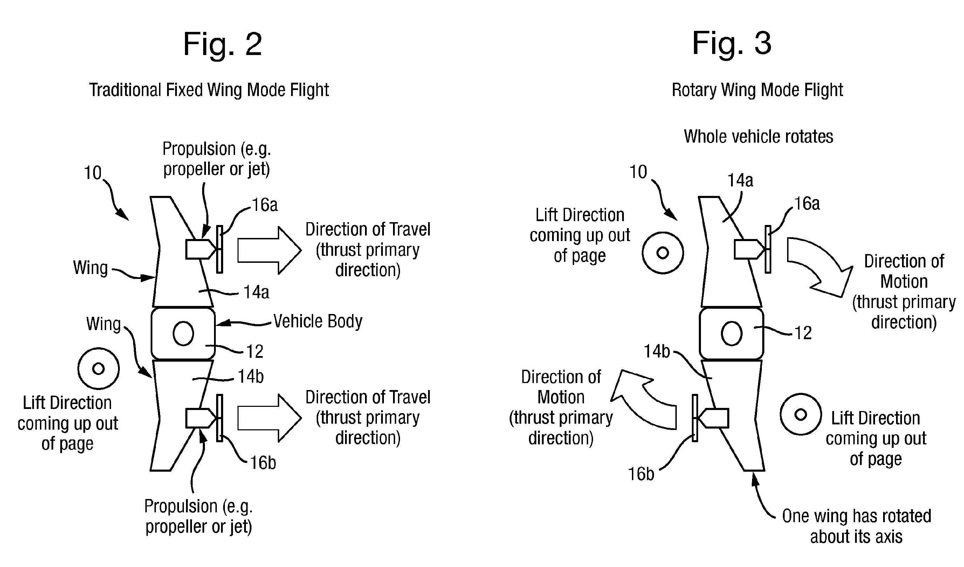

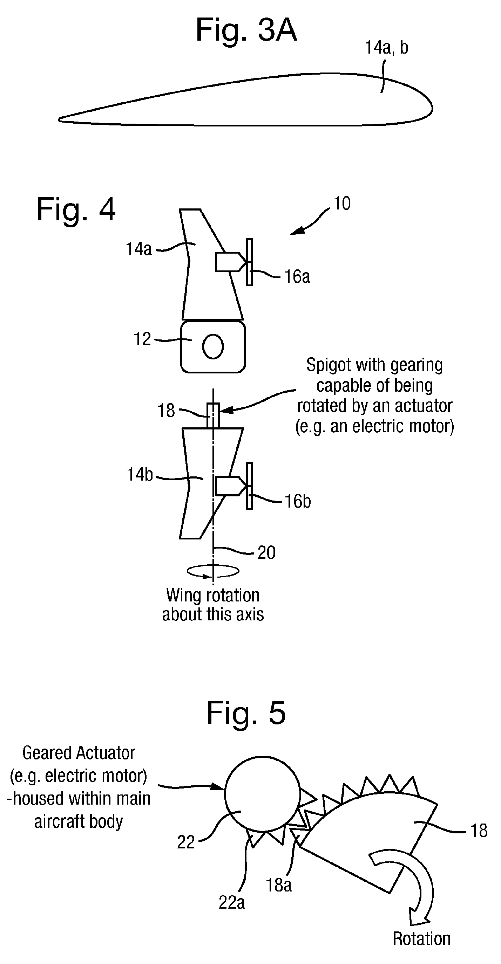

Referring to Figure 2 of the drawings, an air vehicle 10 according to a first exemplary embodiment of the present invention comprises a main body 12, on which are mounted two opposing wing members 14a, 14b such that they extend laterally outward from respective opposing sides of the main body 12. In the example shown, the wings 14a, 14b have a compound swept back configuration, to aid aerodynamic stability and reduce drag, but it will be appreciated that the present invention is in no way intended to be limited with regard to wing configuration. A respective propulsion device 16a, 16b is mounted at the 'leading' edge of each wing 14a, 14b and, in the example shown, the propulsion devices 16a, 16b are facing in the same direction. Thus, when both propulsion devices are operated to generate thrust in the same direction, they cause the vehicle to move forwards. Referring additionally to Figure 3A of the drawings, the aerofoil cross-sectional shape of the wings 14a, 14b produces an aerodynamic force as the vehicle moves forward; and the component of this force perpendicular to the direction of motion is called lift, whereas the component parallel to the direction of motion is called drag. "Turning" of the air in the vicinity of the aerofoil creates curved streamlines, resulting in lower pressure on one side and higher pressure on the other. This pressure difference is accompanied by a velocity difference, via Bernoulli's principle, so the resulting flowfield about the aerofoil has a higher average velocity on the upper surface than on the lower surface. The lift force is related directly to the average top/bottom velocity difference.

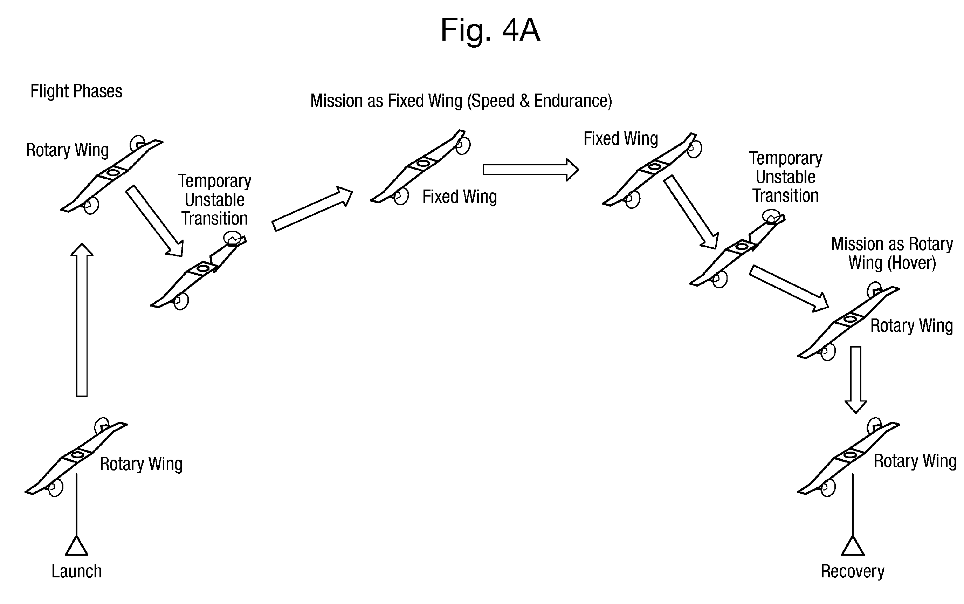

Referring back to Figure 2 and also to Figure 4 of the drawings, at least one of the wings 14b is rotatably mounted on the side of the main body 12 by means of a longitudinal shaft 18 extending from the inner end of the wing 14b. Thus, referring to Figure 3 of the drawings, in the event that it is required to change the mode of flying of the vehicle 10 from fixed wing to rotary wing flying mode, a control signal is generated that causes the wing 14b to rotate about the axis 20 defined by the shaft 18, such that the leading edge of the wing 14b and the associated propulsion device 16b are facing in the opposite direction. With the thrust from the two propulsion devices 16a, 16b now operating in opposite linear directions, the net result is a rotary force that causes the air vehicle 10 as a whole to spin. Lift is maintained because the spinning wings act a rotary blade forcing air downwardly to overcome the force of gravity and create vertical lift. However, it is envisaged that the effective aerofoil cross-section of the propeller blades may be dynamically altered according to their relative location within a rotary cycle in order to maintain efficient horizontal movement of the vehicle. In the rotary wing mode, the aircraft can be controlled in a manner similar to a conventional rotary wing air vehicle, to control vertical, horizontal and rotational movement of the vehicle, as required.

Thus, referring to Figure 4A of the drawings, the present invention provides an air vehicle concept which is capable of hovering flight, taking off and landing vertically within landing zones similar to, or smaller than, those associated with typical rotary wing aircraft, but has the ability to transition to fixed wing flight, thereby achieving the increased speed and endurance characteristics associated therewith.

There are a number of different ways in which rotation of the wing 14b could be achieved, as will be apparent to a person skilled in the art. In one exemplary embodiment, and referring additionally to Figure 5 of the drawings, the end of the shaft 18, which may comprise a geared spigot, may be coupled to a geared actuator 22 (e.g. electric motor) housed within the main body 12, such that when the actuator 22 (e.g. the main shaft of an electric motor) is rotated, a set of teeth 22a on its outer periphery engage with a corresponding set of circumferential teeth 18a on the spigot/shaft 18 causing corresponding rotary movement of the shaft 18 and, therefore, the wing 14b coupled thereto.

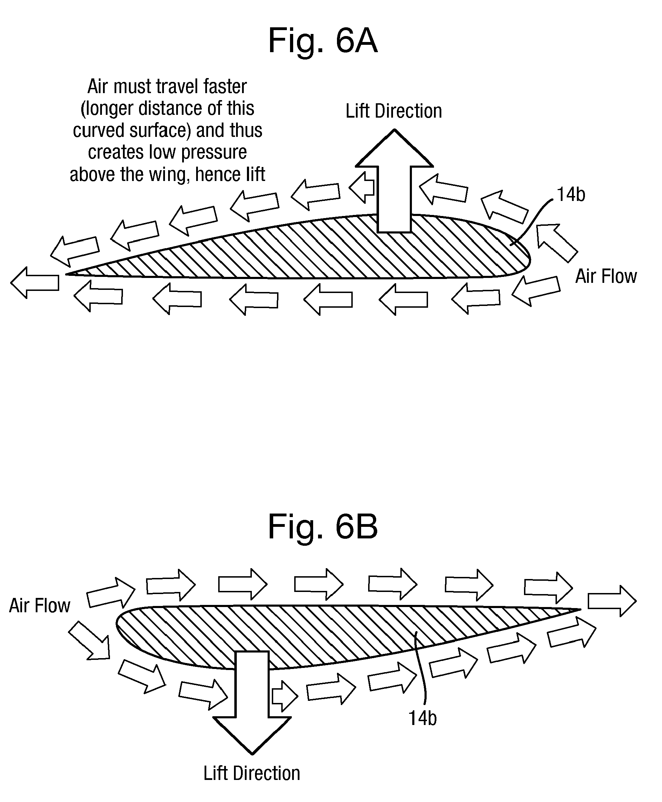

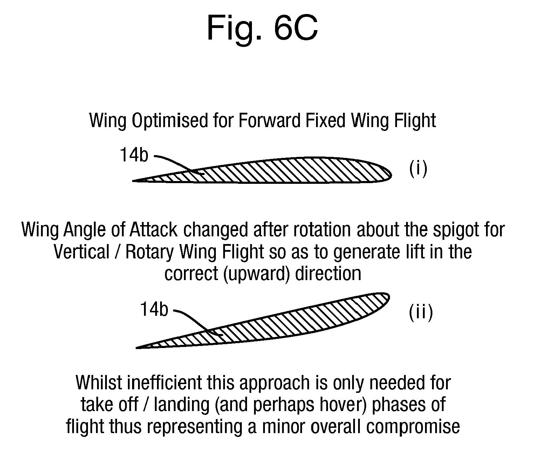

It will be appreciated, however, depending on the cross-sectional shape of the rotated wing 14b, there may be an issue caused by the inversion of the aerofoil, which in turn will have a counter-productive effect on the lift component of the aerodynamic force created as the wing moves through the air, depending on where the wing is within a complete rotary cycle of the vehicle. This is illustrated schematically in Figures 6A and 6B of the drawings. Thus, as shown in Figure 6A, a typical aerofoil cross-section will create a higher pressure across the bottom of the wing 14b, thus creating upward lift. Whereas, as shown in Figure 6B of the drawings, when the wing 14b has been rotated through 180° and the aerofoil has thus been inverted, the higher pressure area occurs at the upper surface of the wing 14b, thus creating a downward 'lift', which may cause the air vehicle to tumble out of control and/or otherwise descend.

It is envisaged that this issue could be addressed by effecting an altered angle of attack in respect of the rotated wing, cyclically or otherwise, when in the rotary wing mode, possibly depending on where the wing is within the rotary cycle. Thus, referring to 6C of the drawings, in (i), the wing aerofoil, optimised for fixed wing flight is illustrated schematically, whereas in (ii), it can be seen that the angle of attack of the wing 14b may be changed for the rotary wing flight mode so as to generate lift in the upward direction. As shown, in the rotary wing mode, the wing 14b has not only been rotated 180° about its central longitudinal axis to reverse the direction of the propulsion device 16b, but it has also been rotated downward, about an orthogonal axis (parallel to the thrust direction). This additional rotation could also be achieved via the spigot 18 engaged with the actuator. Furthermore, it is envisaged that the orientation of the aerofoil cross-section of the propeller blades (relative to the direction of motion of the vehicle) may be alternately, cyclically or dynamically changed as it completes each rotary cycle, to prevent a counter-productive effect on horizontal movement of the vehicle.

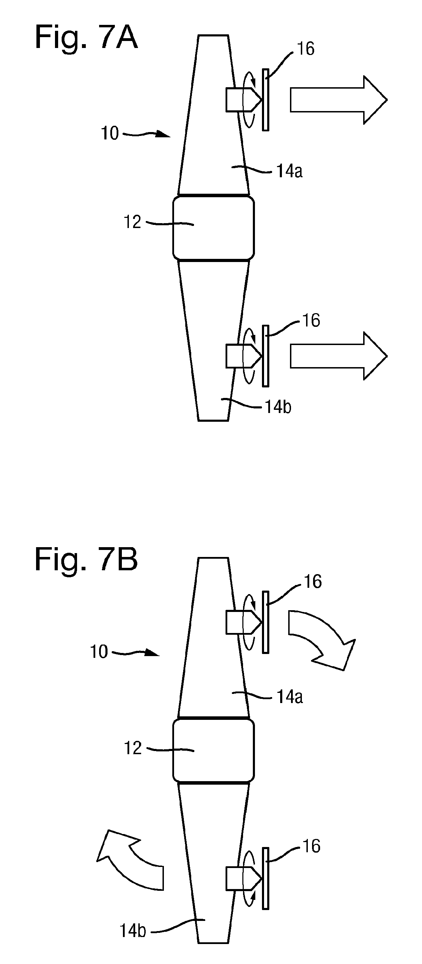

Referring to Figures 7A and 7B of the drawings, therefore, in an alternative exemplary embodiment, rather than rotating the wing 14b through 180° to create the reversal of thrust direction in respect of one of the propulsion devices 16, it is envisaged that the direction of rotation of the propulsion device 16 could instead be reversed. As shown in Figure 7A, in the fixed wing mode, the propulsion devices 16 are both rotating or otherwise operating such that the thrust generated thereby is in the same direction relative to the vehicle body 12, as in the previous exemplary embodiment. However, in this case, and referring to Figure 6B of the drawings, in the rotary wing mode, the wings 14a and 14b remain fixed and the location of the respective propulsion devices 16 also remains fixed. Instead, in response to a control signal, the direction of rotation of one of the propulsion devices 16 is reversed, such that the thrust direction is reversed to have the effect of 'pushing' the associated wing 14b in a direction opposite to the 'pull' being created on the opposing wing 14a, as illustrated schematically in Figure 7B of the drawings. This causes the entire vehicle, including the wings 14a, 14b and body 12, to spin.

Helicopters and similar rotary wing air vehicles employ a swashplate to translate input via helicopter flight controls into motion of the rotor blades. The swash plate assembly has two primary roles: under the direction of a collective control, it can change the angle of both blades simultaneously. Doing this increases or decreases the lift supplied to the vehicle, allowing it to gain or lose altitude; under the direction of cyclic control, on the other hand, the swash plate assembly can change the angle of the blades individually as they revolve, allowing the vehicle to move in any direction around a 360° circle, including forward, backward, left and right. In summary, the collective control changes the angle of attack on both blades simultaneously, to ascend or descend, whereas the cyclic control tilts the swashplate assembly so that the angle of attack on one side of the vehicle is greater than on the other.

In the present invention, wherein the entire vehicle is spinning in the rotary wing mode, provision can be made to enable similar (automatic or remote) control of the air vehicle during a flight. In a conventional rotary wing vehicle, the speed of rotation of the rotary wing is substantially constant throughout, whereas in accordance with exemplary embodiments of the present invention, the control module may be configured to generate control signals (in response to control inputs) to increase the speed of rotation of the propulsion devices 16 (and, therefore, the entire vehicle) in order to cause the vehicle to gain altitude and, conversely, decrease the speed of rotation of the vehicle in order to cause the vehicle to lose altitude. The cyclic control required to effect horizontal movement may be achieved in a number of different ways. In a first exemplary embodiment, adjustable slats or flaps may be provided on the wings 14a, 14b to enable small asymmetries to be selectively created in respect of the wing cross section(s). In an alternative exemplary embodiment, the wings 14a, 14b may be adjustably mounted on the body 10 and means may be provided for selectively adjusting the angle of attack of one or both wings so as to introduce a differential therebetween.

It will be appreciated by a person skilled in the art, from the foregoing description, that modifications and variations can be made to the described embodiments, without departing from the scope of the invention as defined in the appended claims.

## Claims

1. An air vehicle comprising a main body and a pair of opposing wing members extending substantially laterally from the main body, at least a first propulsion device associated with a first of said wing members and a second propulsion device associated with a second of said wing members, each said propulsion device being arranged and configured to generate linear thrust relative to said main body, in use, the air vehicle further comprising a control module for generating a control signal configured to change a mode of flying of said air vehicle, in use, between a fixed wing mode and a rotary wing mode, wherein, in said fixed wing mode of flying, the direction of thrust generated by the first propulsion device relative to the main body is the same as the direction of thrust generated by the second propulsion device, and in said second mode of flying, the direction of thrust generated by the first propulsion device relative to the main body is opposite to that generated by the second propulsion device.

2. An air vehicle according to claim 1, wherein said propulsion devices are fixedly coupled to respective wing members, and at least one of said wing members is rotatably mounted with respect to said body for rotation about an axis orthogonal to the width of the main body when in an upright orientation, between a first position defining said fixed flying mode wherein thrust generated by both said propulsion devices acts in the same direction relative to the main body, and a second position defining said rotary wing flying mode wherein thrust generated by said propulsion devices acts in opposite respective directions relative to said main body.

3. An air vehicle according to claim 2, wherein said at least one wing member is configured to rotate through substantially 180° about said axis between said first and second positions.

4. An air vehicle according to claim 2 or claim 3, wherein the at least one wing member is mounted to the main body via a coupling member, said coupling member engaging with an actuation device located in or on said main body, wherein operation of said actuation member is effected by said control signal and causes rotation of said at least one wing member via said coupling member.

5. An air vehicle according to claim 4, wherein said at least one wing member is mounted to said main body via a geared spigot, the air vehicle further comprising a geared actuator assembly with which said geared spigot engages, in use, wherein rotation of said actuator causes corresponding rotation of said at least one wing member, via said geared spigot, between said first and second positions.

6. An air vehicle according to claim 1, wherein said propulsion devices comprise propellers, and said change of mode of flying is effected by changing the direction of rotation of one of said propellers.

7. An air vehicle according to any of the preceding claims, wherein said control module is configured to receive control inputs representative of vehicle movement and generate control signals configured to cause the respective vehicle movement.

8. An air vehicle according to claim 7, wherein said vehicle movement comprises an increase or decrease in altitude, and said control signals are configured to cause a respective substantially equal increase or decrease in thrust generated by both of said propulsion devices.

9. An air vehicle according to claim 7 or claim 8, wherein said vehicle movement comprises a horizontal movement in a selected direction, said wing members comprising selectively movable flight control members, said control signals being configured to effect cyclic control of said air vehicle by selectively changing the cross-sectional shape of the respective wing members by selective movement of said flight control members.

10. An air vehicle according to any of claims 7 to 9, wherein said vehicle movement comprises a horizontal movement, and said control signals are configured to alter the angle of attack of one or both said wing members to effect a selected horizontal movement of said vehicle.

11. An air vehicle according to any of claims 7 to 10, including a mechanism for changing the aerofoil cross-section of the blades of said propeller, relative to the direction of movement of said vehicle, according to the relative location of said blades within a rotary cycle of said propeller.

12. An unmanned air vehicle according to any of the preceding claims.

13. A control module for a vehicle according to any of claims 1 to 12, the control module being configured to receive a control input and generate a control signal representative thereof configured to change the mode of flying of said air vehicle from said fixed wing mode to said rotary wing mode.

14. A method of controlling an air vehicle comprising a main body and a pair of opposing wing members extending substantially laterally from the main body, at least a first propulsion device associated a first of said wing members and a second propulsion device associated with a second of said wing members, each said propulsion device being arranged and configured to generate linear thrust relative to said main body, in use, the method comprising changing a mode of flying of said air vehicle from a fixed wing mode, in which the direction of thrust generated by the first propulsion device relative to the main body is the same as the direction of thrust generated by the second propulsion device, to a rotary wing mode, by changing the direction of thrust generated by the first propulsion device such that it is opposite to that generated by the second propulsion device relative to the main body.
